# EUROPEAN PATENT SPECIFICATION

(11) **EP 3 208 509 B1**
(45) Date of publication and mention of the grant of the patent: **12.01.2022**
(21) Application number: 16382066.5
(22) Date of filing: 19.02.2016
(51) Int. Cl.: F16M 11/14, F16M 11/04

(54) **SECURITY CAMERA WITH MOBILE SUPPORT**
SICHERHEITSKAMERA MIT MOBILER UNTERSTÜTZUNG
CAMÉRA DE SÉCURITÉ AVEC SUPPORT MOBILE

(43) Date of publication of application: 23.08.2017
(73) Proprietor: Ontech Security SL, 41309 La Rinconada (ES)
(72) Inventor: Aponte Luis, Juan, 41309 La Rinconada (ES)
(74) Representative: Sahuquillo Huerta, Jesús

(56) References cited:
- US-A1- 2009 196 597
- US-A1- 2012 114 324
- US-A1- 2013 078 855
- US-A1- 2015 208 826

## Description

The object of the present invention is a security camera with mobile support comprising a magnetic ball joint attachment allowing the placement of the camera in any position and a rotation angle of 360º.

### State of the art

Well known are the magnetic supports and, especially, the attachments of magnetic ball joint type that allow a rotation of 360º of the objects supported by them. However, in most cases, the attachments are limited in their movements to avoid that due an excessive load due to the supported element, the normal functioning of the system can be distorted, as described, for example, in US9097379 or US20080023607.

In general, this type of attachments can rarely have the turn in all directions that you want to, or their movements are not smooth enough or strong enough. In addition, on many occasions, magnetic couplings need to be reinforced with threads or other additional couplings.

On the other hand, security cameras usually have complex fixed or remotely operated mechanical supports that complicate the installation and, in addition, do not allow a versatile image focusing.

The document US2012/0114324 discloses an enhanced magnetic directional mount for mounting, positioning, and orienting an electronic device such as a camera. In this enhanced mount, the base mounting surface is configured to maximize the extent of adjustment and ease of adjustability of the electronic device, and the base mounting surface and housing mounting surface are designed to provide smooth and secure movement in the electronic device position.

The document US2013/0078855 discloses a mount for supportably engaging an article. The mount includes a bulbous member that may include a convexly shaped surface area. The convexly shaped surface area may be supportively contactable with a first interconnect portion of a carrier member. An attachment member that is operatively associable with a device may be removably engageable with a second interconnect portion of the carrier member. The carrier member may be moved throughout a continuum of positions defined by the convexly curved surface area of the bulbous member. Additionally, the bulbous member may be supportably engaged by a variety of embodiments of support structures for supporting or mounting the mount.

Finally, document US2009/196597 discloses a magnetic mount is provided for easily mounting, positioning, and orienting a camera, sensor or other directionally sensitive electronic device. In one example the magnetic mount is a camera mount. The camera mount has a camera part that has an image sensor, electronics, battery, and communication components. The housing for the camera part has a generally concave mounting surface, with a magnet positioned inside the camera housing and adjacent to the camera mounting surface. A base part has a base mounting surface that is constructed to be attracted to the magnet. In one example, the base mounting surface is dome-shaped, with a convex curvature constructed to mate with the concave curvature of the camera mounting surface. The base part is mounted to a stable support, and the camera mounting surface brought near the base counting surface. The magnetic attractive forces pull the camera part firmly to the base part, thereby securely positioning and orienting the camera. However, the camera may be readily repositioned by pushing the camera into a new position. The size and shape of the complementary mounting surfaces may be selected according to positioning requirements.

### Description of the invention

In order to alleviate the problems set forth in the State of the art it is presented the security camera with mobile support combining a security camera inserted into a body magnetically attached through a ball joint with a support set in the desired position. All of this according to the independent claiming that accompanies the present descriptive specification. The particular embodiments of the invention are described in the dependent claims.

Thanks to this structure, the advantages of a light security camera with a very versatile support structure allowing a positioning at 360º are combined. Thus, the freedom of movement of the ball joint reside, firstly, on freedom of movement of the sphere that makes up the ball joint and that is far superior to other ball joints described in the State of the art which need additional connections of the thread type, or the like. Therefore, there are no obstacles for its turn in any direction given that the accommodation in the body of the camera is very shallow in relation to other ball joint systems. Since the magnetic coupling is shallow, the friction is minimal and the smoothness of movements is greater.

In terms of the ball joint assembly, this is very simple. Welds or screw connections are not necessary, and the same strength of magnet ensures the perfect union among all the elements.

Finally, the magnetic coupling allows closing an internal circuit that enables the camera power on and off and, where appropriate, the notifying a central surveillance system such as that described in WO2015044487 when the camera is disabled.

Throughout the description and claims, the word "comprises" and its variations are not intended to exclude other technical features, additives, components or steps. For those skilled in the art, other objects, advantages and characteristics of the invention will emerge in part from the description and in part from the practice of the invention. The following examples and drawings are provided by way of illustration, and are not intended to be limiting of the present invention. Furthermore, the present invention covers all the possible combinations of particular and preferred embodiments herein indicated.

### Brief description of the figures

There follows a very brief description of a series of drawings that help to provide a better understanding of the invention and which are associated expressly with an embodiment of said invention that is presented as a non-limiting example thereof.
FIG. 1 shows a front perspective view of the camera object of the present invention.
FIG. 2 shows a rear perspective view of the camera object of the present invention.

### Preferred embodiment of the invention

As shown in the accompanying figures, the present invention comprises two elements or bodies (100, 200) separable from each other. The first body 100 is configured to house a surveillance or security camera and the second body 200 is configured as a support or anchor attached to an anchorage point, e.g., an architectural enclosure.

The first body 100 is essentially circular and flat and is configured to house therein a surveillance camera and electronics associated with the same. The first body 100 comprises two facing surfaces, a first front surface 101a and a second back surface 101b.

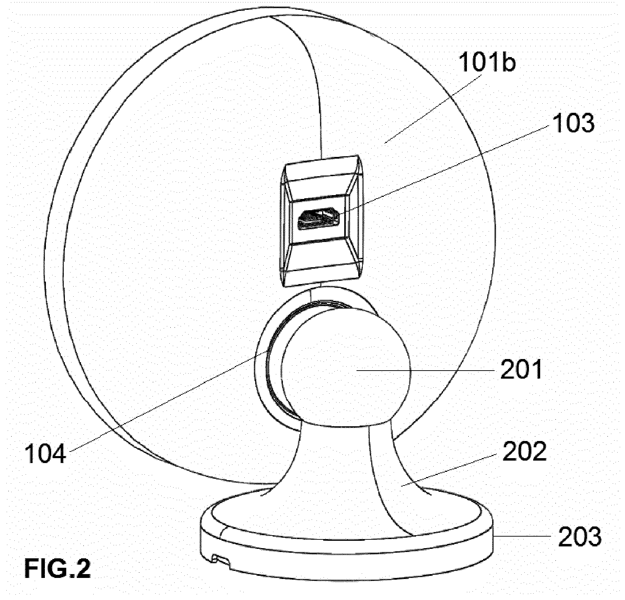

In the first front surface 101a is located the opening to enable the operation of the camera lens 102. On the other hand, in the second back surface 101b is located a port 103 suitable for the power supply of at least one battery integrated inside the first body 100. In the practical embodiment shown in FIG. 2 it is observed that such port is a mini USB port, although logically any person skilled in the art does not rule out other means or power supply ports with identical functionality.

The second back surface 101b of the body 100 has a spherical concavity 104 the central part of which makes up the housing for a sphere 201 of the second support body 200 and which is rotary with regard to the spherical concavity 104 of the first body 100.

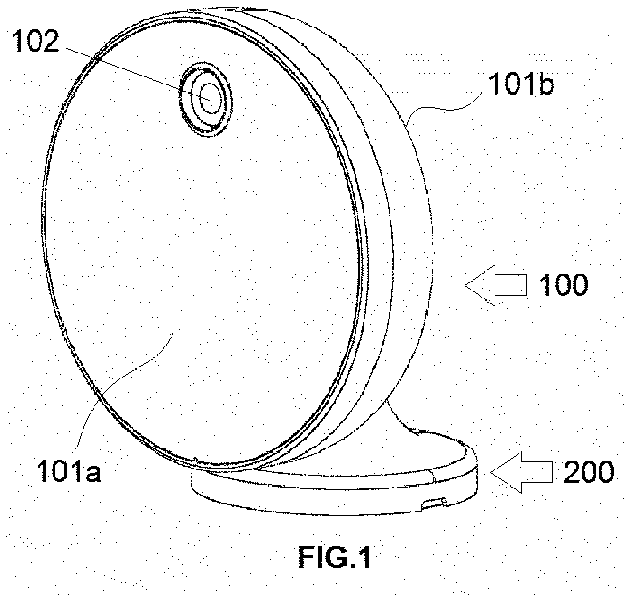

The sphere 201 and concavity 104 are magnetically joined in use position, as shown the FIGs. 1-2. This magnetic coupling between sphere 201 and concavity 104 also has the particularity of closing a circuit in such a way that the camera is active only when el first body 100 is joined to the second body 200, being able to power on and off with the simple act of anchoring or unanchoring both bodies from each other.

This type of attachment and its power on/off operation has the advantage that when it is used in security systems, for example that described in WO2015044487 in the event that someone maliciously forces the withdrawal of the first body 100 containing the camera, it automatically generates a notification to the security centre described in such document.

The magnetic ball joint attachment implemented by the present invention and shown in FIGs. 1-2 in a particular embodiment thereof further comprises an internal accelerometer, housed in the first body 100 and which self-orientates the images captured through the lens 102. Indeed, with the use, the first body 100, and also the lens 102, may have altered its position so in this additional embodiment the means for transmitting the image can also send the position of the first body 100 as metadata to correct the focusing of the lens 102 until a correct focusing.

Furthermore, in another additional embodiment, the first body 100 comprises at least two laser pointers marking or pointing the ends of the correct field of view, that is, the field of view where the focusing of the lens 102 allows taking a straight image of the element under surveillance.

Finally, the second body or support 200 is completed with a pin 202 connected in turn with a base 203 that is capable of being firmly attached with an architectural structure, for example, a wall.

## Claims

1. Security camera with mobile support comprising:
a first body (100) and a second body (200) separable from each other, wherein the first body (100) is configured to house a surveillance or security camera and the second body (200) is configured as a support of said first body (100) firmly attached to an anchorage point;
wherein the first body (100) comprises two facing surfaces, a first front surface (101a) and a second back surface (101b); and where the first front surface (101a) comprises at least one opening for the passage of at least one camera lens (102); and where the second back surface (101b) of the first body (100) comprises a spherical concavity (104);
wherein the security camera comprises a ball joint assembly consisting of a sphere (201) of the second support body (200) which is housed in the central part of the spherical concavity (104); said sphere (201) being rotary 360° with regard to the spherical concavity (104) of the first body (100);
**characterised in that** the sphere (201) and the spherical concavity (104) are magnetically joined closing an electronic circuit in such a way that the camera is active only when the sphere (201) of the second support body (200) is housed in the central part of the spherical concavity (104) of the first body (100); and
whereby the first body (100) houses an accelerometer configured to self-orientate the image captured through the camera lens (102) in such a way that means arranged for transmitting the image from the camera lens also send the position of the first body (100) as metadata in order to correct the focusing of the camera lens (102) until a correct focusing.

2. The camera according to claim 1 comprising at least two laser pointers pointing the ends of the field of view where the focusing of the lens (102) allows taking a straight image of an element under surveillance.

3. The camera according to any of claims 1 to 2, wherein the second body (200) is completed with a pin (202) connected in turn with a base (203) that is capable of being firmly attached to an architectural structure.

4. The camera according to the claim 1 wherein the second back surface (101b) of the first body (100) comprises a port (103) suitable for the power supply of, at least, one battery integrated inside the first body (100).

## Patentansprüche

1. Sicherheitskamera mit mobiler Unterstützung, bestehend aus:
einen ersten Körper (100) und einen zweiten Körper (200), die voneinander trennbar sind, wobei der erste Körper (100) so konfiguriert ist, dass er eine Überwachungs- oder Sicherheitskamera aufnimmt, und der zweite Körper (200) als ein Träger des ersten Körpers (100) konfiguriert ist, der fest an einem Verankerungspunkt angebracht ist;
wobei der erste Körper (100) zwei einander zugewandte Oberflächen aufweist, eine erste vordere Oberfläche (101a) und eine zweite hintere Oberfläche (101b); und wobei die erste vordere Oberfläche (101a) mindestens eine Öffnung für den Durchgang von mindestens einer Kameralinse (102) aufweist; und wobei die zweite hintere Oberfläche (101b) des ersten Körpers (100) eine kugelförmige Aushöhlung (104) aufweist;
wobei die Sicherheitskamera eine Kugelgelenkbaugruppe umfasst, die aus einer Kugel (201) des zweiten Trägerkörpers (200) besteht, die in dem zentralen Teil der kugelförmigen Aushöhlung (104) untergebracht ist; wobei die Kugel (201) in Bezug auf die kugelförmige Aushöhlung (104) des ersten Körpers (100) um 360° drehbar ist;
**dadurch gekennzeichnet, dass** die Kugel (201) und die kugelförmige Aushöhlung (104) magnetisch verbunden sind und einen elektronischen Schaltkreis derart schließen, dass die Kamera nur dann aktiv ist, wenn die Kugel (201) des zweiten Trägerkörpers (200) in dem zentralen Teil der kugelförmigen Aushöhlung (104) des ersten Körpers (100) untergebracht ist; und
wobei der erste Körper (100) einen Beschleunigungsmesser beherbergt, der so konfiguriert ist, dass er das durch das Kameraobjektiv (102) aufgenommene Bild so ausrichtet, dass Mittel, die zur Übertragung des Bildes vom Kameraobjektiv angeordnet sind, auch die Position des ersten Körpers (100) als Metadaten senden, um die Fokussierung des Kameraobjektivs (102) bis zu einer korrekten Fokussierung zu korrigieren.

2. Kamera nach Anspruch 1 mit mindestens zwei Laserpointern, die auf die Enden des Sichtfeldes zeigen, wo die Fokussierung des Objektivs (102) die Aufnahme eines geraden Bildes eines zu überwachenden Elements ermöglicht.

3. Kamera nach einem der Ansprüche 1 bis 2, wobei der zweite Körper (200) durch einen Stift (202) vervollständigt wird, der seinerseits mit einem Sockel (203) verbunden ist, der fest an einer architektonischen Struktur angebracht werden kann.

4. Kamera nach Anspruch 1, bei der die zweite Rückfläche (101b) des ersten Gehäuses (100) einen Anschluss (103) aufweist, der für die Stromversorgung mindestens einer im ersten Gehäuse (100) integrierten Batterie geeignet ist.

## Revendications

1. Caméra de sécurité avec support mobile comprenant :
un premier corps (100) et un second corps (200) séparables l'un de l'autre, dans lequel le premier corps (100) est configuré pour loger une caméra de surveillance ou de sécurité et le second corps (200) est configuré comme un support dudit premier corps (100) fermement fixé à un point d'ancrage ;
dans lequel le premier corps (100) comprend deux surfaces opposées, une première surface avant (101a) et une seconde surface arrière (101b) ; et dans lequel la première surface avant (101a) comprend au moins une ouverture pour le passage d'au moins un objectif de caméra (102) ; et dans lequel la seconde surface arrière (101b) du premier corps (100) comprend une concavité sphérique (104) ;
dans laquelle la caméra de sécurité comprend un ensemble de joint à rotule constitué d'une sphère (201) du second corps de support (200) qui est logée dans la partie centrale de la concavité sphérique (104) ; ladite sphère (201) étant rotative à 360° par rapport à la concavité sphérique (104) du premier corps (100) ;
**caractérisé en ce que la** sphère (201) et la concavité sphérique (104) sont reliées magnétiquement en fermant un circuit électronique de telle sorte que la caméra est active uniquement lorsque la sphère (201) du second corps de support (200) est logée dans la partie centrale de la concavité sphérique (104) du premier corps (100) ; et
dans lequel le premier corps (100) abrite un accéléromètre configuré pour auto-orienter l'image capturée à travers l'objectif de la caméra (102) de telle sorte que les moyens agencés pour transmettre l'image depuis l'objectif de la caméra envoient également la position du premier corps (100) en tant que métadonnées afin de corriger la mise au point de l'objectif de la caméra (102) jusqu'à une mise au point correcte.

2. Caméra selon la revendication 1 comprenant au moins deux pointeurs laser pointant les extrémités du champ de vision où la mise au point de l'objectif (102) permet de prendre une image droite d'un élément sous surveillance.

3. Caméra selon l'une quelconque des revendications 1 à 2, dans laquelle le second corps (200) est complété par une broche (202) reliée à son tour à une base (203) apte à être solidement fixée à une structure architecturale.

4. Caméra selon la revendication 1, dans laquelle la deuxième surface arrière (101b) du premier corps (100) comprend un port (103) approprié pour l'alimentation en énergie d'au moins une batterie intégrée à l'intérieur du premier corps (100).
